(19) Europäisches Patentamt
European Patent Office
Office européen des brevets

(11) **EP 2 545 299 B1**

(12) **EUROPÄISCHE PATENTSCHRIFT**

(45) Veröffentlichungstag und Bekanntmachung des Hinweises auf die Patenterteilung:
**19.02.2014 Patentblatt 2014/08**

(21) Anmeldenummer: **11767633.8**

(22) Anmeldetag: **06.10.2011**

(51) Int Cl.:
**F16H 55/08** *(2006.01)*

(86) Internationale Anmeldenummer:
**PCT/EP2011/004984**

(87) Internationale Veröffentlichungsnummer:
**WO 2012/055484 (03.05.2012 Gazette 2012/18)**

(54) **OPTIMIERTE BALLIGKEITEN BEI KEGELZAHNRÄDERN EINES KEGELRADGETRIEBES**

OPTIMIZED CROWNING IN BEVEL GEAR WHEELS OF A BEVEL GEAR TRANSMISSION

BOMBEMENT OPTIMISE SUR DES PIGNONS CONIQUES D'UNE TRANSMISSION A PIGNONS CONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2010 DE 102010049752**

(43) Veröffentlichungstag der Anmeldung:
**16.01.2013 Patentblatt 2013/03**

(73) Patentinhaber: **Schottel GmbH**
**56322 Spay/Rhein (DE)**

(72) Erfinder: **HEER, Manfred**
**56814 Landkern (DE)**

(74) Vertreter: **Cohausz Hannig Borkowski Wißgott Patent- und Rechtsanwaltskanzlei**
**Schumannstrasse 97-99**
**40237 Düsseldorf (DE)**

(56) Entgegenhaltungen:
**WO-A1-2005/044482    DE-B- 1 170 742**

**Beschreibung**

Die Erfindung betrifft ein Verfahren zum Herstellen eines Kegelzahnrades insbesondere für Ruderpropeller, dessen Zähne eine zahnradspezifische Makrogeometrie aufweisen, dessen Zähne durch Flanken- und Profillinien beschreibbar sind, dessen Flanken eine Zahnflankenmikrotopogaphie aufweisen und dessen Tragbild den Kontaktbereich der in den Eingriff kommenden Zähne darstellt, wobei die Balligkeit einer Zahnflanke die Überhöhung der Zahnflankenmitte gegenüber dem Zahnflankenrand entspricht und wobei der Verlauf der Höhen- und Breitenballigkeit der Flankenfläche im wesentlichen kreisbogenförmig.

Kegelzahnräder dienen zum Übertragen von Drehmomenten und Drehbewegungen in Wälzgetrieben. Der Aufbau eines einstufigen Kegelzahnradgetriebes besteht aus Tellerrad und Ritzel. Tellerrad und Ritzel sind mit den zugerhörigen Wellen kraft-, form- oder stoffschlüssig verbunden. In Verlängerung der Wellen finden sich Schnittpunkte oder Kreuzungspunkte der Wellenachsen. Der Bewegungsablauf zweier ineinander greifenden Kegelzahnräder wird als Abwälzen bezeichnet. Dabei kommen die jeweiligen Zahnflanken von Zahn und Gegenzahn in Eingriff.

Verzahnungen bei denen die Zahnflanken von Zahn und Gegenzahn kinematisch exakt abwälzen werden als konjugierte Verzahnung bezeichnet. Die Zahnflanken berühren sich hierbei in jeder Wälzstellung auf einer Linie. Um jedoch ein verbessertes Verlagerungsverhalten zu erzielen, weicht man durch das Einbringen von Balligkeiten von dieser Form ab.

Die Zahngeometrie von Kegelzahnrädern weißt somit im Allgemeinen an den Zahnflanken eine Balligkeit auf, da die Zahnflanken bei großer Lastübertragung nicht auf Ihrer gesamten Breite und Höhe in Eingriff kommen dürfen, da die sonst an den Rändern auftretende Spannungsüberhöhung Zahnschäden hervorrufen würde. Unter der Balligkeit einer Zahnflanke wird die Überhöhung der Zahnflankenmitte gegenüber dem Zahnflankenrand verstanden. Dabei liegen die beiden in Eingriff kommenden Zahnräder nicht vollständig aneinander an. Zwischen zwei Zahnflanken befindet sich im Besonderen im unbelasteten Zustand ein unterschiedlich großer Luftspalt. Der Abstand zwischen zwei Zahnräder wird auch als Lüftung oder Klaffmaß bezeichnet.

Unterschieden wird hierbei zwischen Höhen- und Breitenballigkeit. Bei der Breitenballigkeit wird dieser Verlauf durch eine entsprechende Verkleinerung des Flugkreisradius, bzw. des Durchmessers des Schleifinrerkzeugs realisiert. Der Verlauf der Höhenballigkeit wird durch die Profilierung des Werkzeugs bestimmt, indem dem Bezugsprofil eine kreisförmige Balligkeit überlagert wird. Andere Formen finden in der Praxis aus wirtschaftlichen Gründen keine Anwendung.

Der Verlauf von Balligkeiten bei Kegelrädern wird üblicherweise durch das Fertigungsverfahren bestimmt. Insbesondere bei den bekannten Zyklo-Palloid-Kegelräder und den dafür angewandten Methoden der Fertigbearbeitung (HPG-Verfahren / Schleifen) ist der Verlauf der Balligkeiten annähernd kreisbogenförmig.

Dokument DE 1170742 stellt den nächsten Stand der Technik dar und offenbart die Präambel des Anspruchs 1.

Die Flächen der Zahnräder, die bei Belastung, d.h. Momentübertragung, in Eingriff kommen, werden als Tragbild bezeichnet. Da grundsätzlich Zahn und Gegenzahn nicht vollständig in Eingriffkommen, ist die Flächengröße eines Tragbildes stets kleiner als die der gesamten Zahnflanke. Die aktuell vorherrschende Form des Tragbildes kann mit Form einer Ellipse angenähert beschrieben werden.

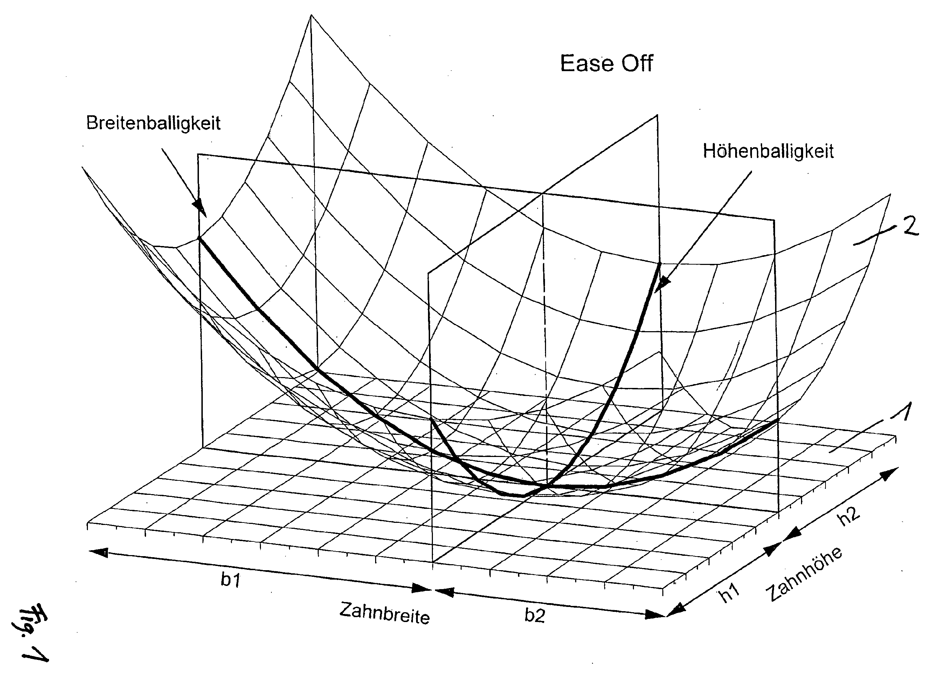

Die tatsächlich in Eingriff kommenden Bereiche sowie die durch die entsprechende Rücknahme der Zahnflanken vorherrschenden Abstände zwischen einem Zahn und dem zugehörigen Gegenzahn können durch das sogenannte "Ease-Off" visualisiert werden (Fig.1). Dabei wird der durch die Balligkeiten entstehende Abstand zwischen der Ritzel- und der Tellerradflanke über einer ebenen Referenzfläche aufgetragen. Diese Fläche erstreckt sich über die gesamte Flankenbreite und -höhe. In der Ease-Off-Darstellung berührt die Zahnflanke die Referenzfläche in einem Kontaktpunkt (Schnittpunkt der beiden dicken Linien im feinen Gitter).

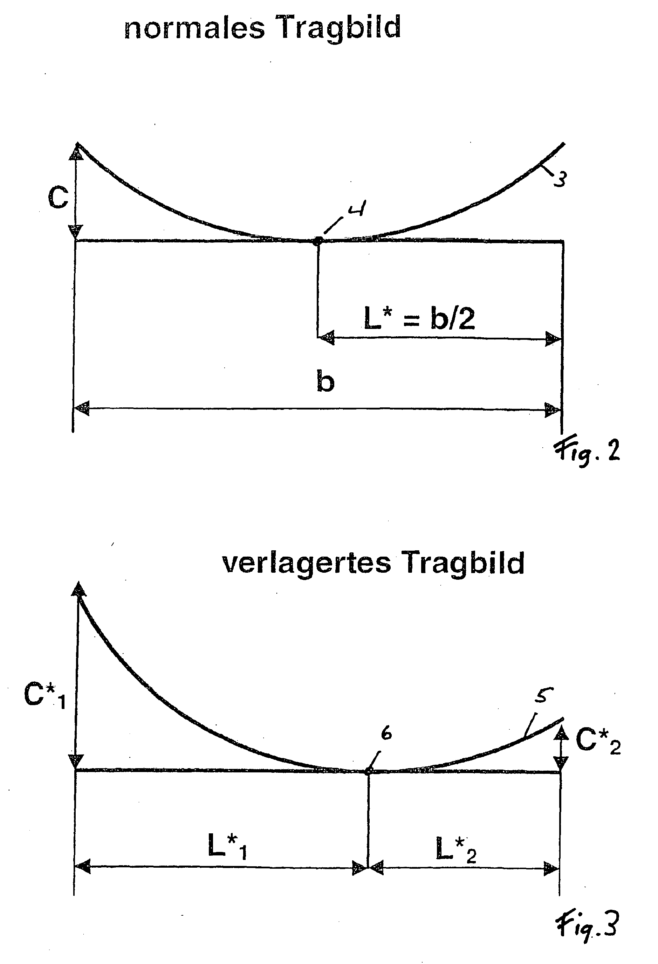

Zur Beschreibung des Balligkeitsverlaufs einer Zahnflanke wird die dazugehörige Kurve in einem Graphen dargestellt, in dem die Lüftung oder auch Balligkeit $C$ über der Zahnbreite bzw. Zahnhöhe aufgetragen wird. In derartigen Graphen wird vom Kontaktpunkt bis zur Kante der Flanke (Ferse, Zehe, Fuß oder Kopf) der Zahnflanke die Länge $L$ aufgetragen. Durch eine Normierung ist die Definition für $L$ und $C$ unabhängig von Absolutwerten, so dass die Kurve für alle gängige Balligkeiten und Zahnbreiten gilt. Am Punkt $L^*$ (der Länge von der entsprechenden Zahnflankenkante) erreicht die Kurve den Wert der normierten Balligkeit $C^*$. (Fig.2).

Die Länge $L^*$ muss dabei jedoch nicht die Hälfte der Zahnbreite, allgemein b, also b/2, bzw. der Zahnhöhe, allgemein $h = 2*m$, also h/2 betragen, da sich der Kontaktpunkt nicht genau in der Zahnmitte befinden muss. Er kann auch exzentrisch auf der Flanke liegen (Fig. 3). Daraus resultiert ein sogenanntes verlagertes Tragbild. Bei einem verlagerten Tragbild verschiebt sich der Kreisbogen zu einer Kante hin, so dass bei gleichem Radius der Abstand der Flanken am Rand nicht mehr der Balligkeit entspricht (Fig. 4 und 5). Die normierte Balligkeit $C^*$ bezieht sich daher auf den tatsächlichen Abstand der korrigierten zur unkorrigierten Flanke am jeweiligen Flankenrand, nicht auf die nominelle Balligkeit. Zur Beschreibung von einer kreisbogenförmigen "normalen" Balligkeit werden zwei Merkmale definiert.

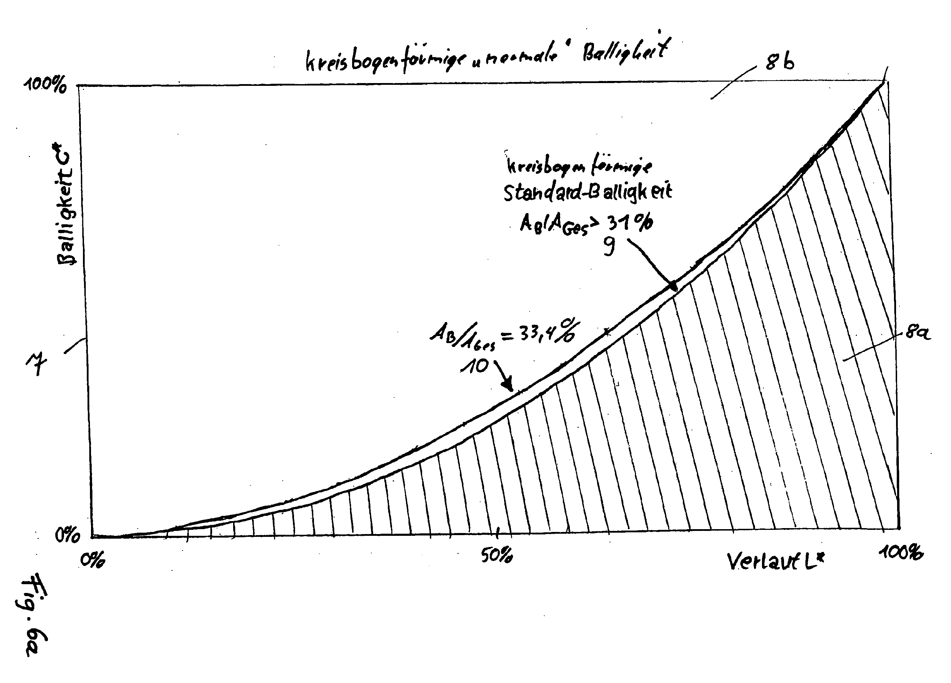

1. Betrag der Fläche unterhalb der Kurve (Fig. 6a)
Beim normalen Balligkeitsverlauf beträgt die Fläche $A_B$ unter der Kurve für gängige Standardballigkeit (b/500..b/1500, bzw. $0,003m_0..0,006m_0$) üblicher-

weise etwa 33,4 % mindestens jedoch 31 % der Gesamtfläche A_Ges = L* x C* .

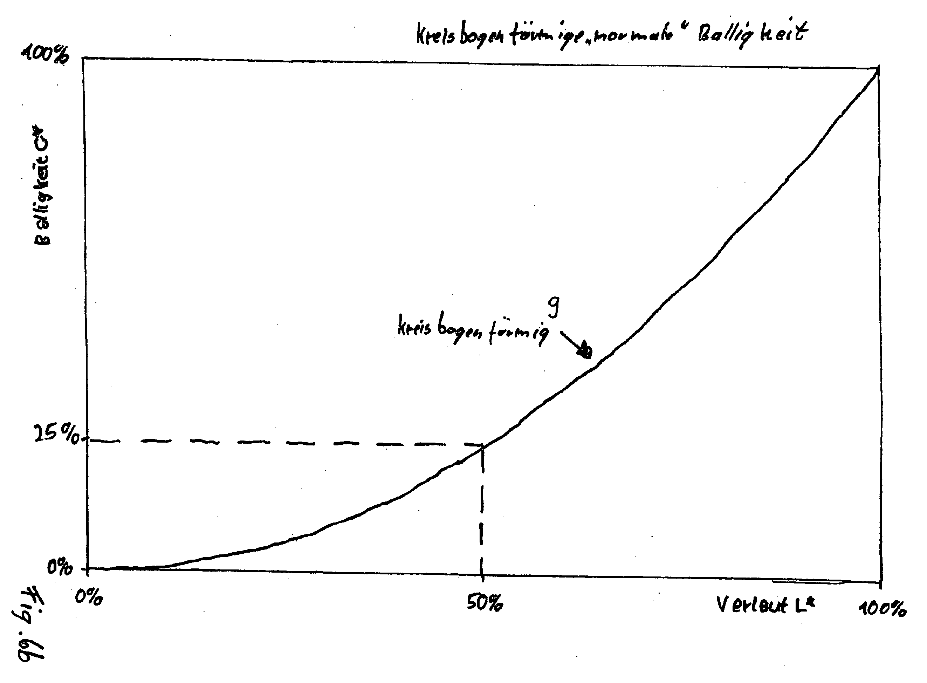

2. Betrag der Kurve in der Mitte der Länge L* (Fig. 6b)
Bei L*/2 beträgt der Funktionswert der normalen Balligkeit etwa 25 % von C*.

Als limitierender Faktor bei der Momentübertragung gilt die max. zulässige Flächenpressung. Beim Weichverzahnen ist diese niedrig, so dass die Herstellung der konjugierten Verzahnungen hierbei kostengünstig mittels Standardfertigungsverfahren erfolgt. Beim Hartverzahnen treten hohe Flächenpressungen auf. Treten Flächenpressungen auf die über einen zulässigen Grenzwert hinaus gehen, so kommt es zu Zahnschäden. Um eine Momentübertragung weiter zu steigern und höhere Grenzwerte zu erzielen, werden verschieden Ansätze verfolgt:

• Einsatz von tragfähigere Materialien, im besonderen hoch vergüteten Stählen
• Durchführung von Oberflächenhärtung
• Herstellen von Zahnflanken mit einer hohen Oberflächengüte

Der Einsatz von hoch vergüteten Stählen ist kostenintensiv aufgrund teurer Rohstoffe und hoher Bearbeitungskosten. Die Bearbeitung von hoch vergüteten Stahlprodukten bzw. die Weiterbearbeitung von veredelten Oberflächen in nachfolgenden Fertigungsschritten ist aufgrund der Materialhärte aufwendig und teuer.

Zeitgleich stoßen die Veredelungsverfahren bei den jeweils geforderten zu übertragenden Drehmomenten bezogen auf einen speziellen Bauraum des • Getriebes an Grenzen der materialspezifischen zulässigen Flächenpressungen.

Insbesondere nutzen aktuelle Zahnflankenformen nicht die maximal mögliche Fläche einer Zahnflanke zur Kraftübertragung, da die bisher ausgeprägten elliptischen Tragbilder nicht den möglichen nutzbaren Teilbereich einer Zahnflanke abdecken. Das maximal zulässige Tragbild einer Zahnflanke herzustellen ist aufgrund der bisher eingesetzten Standardfertigungsverfahren nicht möglich.

Schließlich sind Anpassungen der Zahnflankenkontur bisher nur unter dem Aspekt der Geräuschreduzierung analysiert und optimiert worden. Die Optimierungen erfolgten dabei mit Sonderfertigungsmaschinen oder in Einzelteilfertigung.

Aufgabe der Erfindung ist Kegelzahnräder eines Kegelzahnradgetriebes der Eingangs genannten Art so zu verbessern, dass diese eine größeres optimiertes Tragbild aufweisen um ein größeres Drehmoment übertragen zu können.

Diese Aufgabe wird erfindungsgemäß dadurch gelöst, dass durch eine punktgenaue Materialabtragung die Mikrotopographie der Zahnflanke und somit das Tragbild optimiert wird,

• indem die Materialabtragung derart ausgeführt wird, dass die Endrücknahme an der Zahnflankenfläche zur Zahnfersenseite und Zahnzehenseite verringert wird, eine Fläche mit größerer Länge und Breite auf der Zahnflanke zum Eingriff kommt,
• indem der Verlauf der Balligkeit einer Zahnflanke bei der lastfreien Betrachtung der Lüftung (Ease-Off) bei einem Längsschnitt in der Flankenschnittfläche und/oder bei einem Profilschnitt in der Profilschnittfläche einer annähernd logarithmischen, elliptischen und/oder exponentiellen Kurvenform folgt, die durch den Berührpunkt verläuft,
• indem ein Fräser eine Bearbeitungskurve abfährt, die mit einer Korrekturkurve zum Erzeugen des optimierten Lasttragbildes überlagert ist und die die Profillinien und/oder Flankenlinien entlang der gesamten Zahnbreite und Zahnhöhe der entsprechenden mathematischen Korrekturkurve (logarithmischer, elliptischer oder exponentieller Art) bildet, wobei diese zwischen der oberen und der unteren Grenzkurve liegt,
• dass die Verzahnung als Spiralverzahnung oder Bogenverzahnung ausgeführt wird.

Dies kann durch neue Fertigungsverfahren, vorzugsweise mit Hilfe von Material abtragenden Multiachs-Fertigungsverfahren, insbesondere dem 5-Achs-Fräsverfahren erfolgen. Dabei kann die Form der Balligkeit einer Zahnflanke beliebig modifiziert, und somit optimiert werden. Ziel dabei ist es die tragende Gesamtfläche der Zahnflanke zu vergrößern und gleichzeitig das Verlagerungsverhalten zu optimieren. Insbesondere beim Hartverzahnen stellt somit die Fertigung eines optimierten punktuellen Balligkeitsverlaufes durch Mehrachsfräsmaschinen ein neues Fertigungsverfahren dar.

Die Herstellung von optimierten Balligkeitsverläufen entlang logarithmischer, elliptischer oder exponentieller Kurven bzw. einer Kombination der voranstehend genannten Formen ermöglicht Zahnflanken bei Zahnrädern die bei gleichen geometrischen Grunddaten und gleichen Werkstoffkennwerten größere Leistungen übertragen können.

Die Differenzierung der "neuen" optimierten Balligkeit von der kreisbogenförmigen "normalen" Balligkeit erfolgt durch die Definition folgender zwei Merkmale der Kurve:

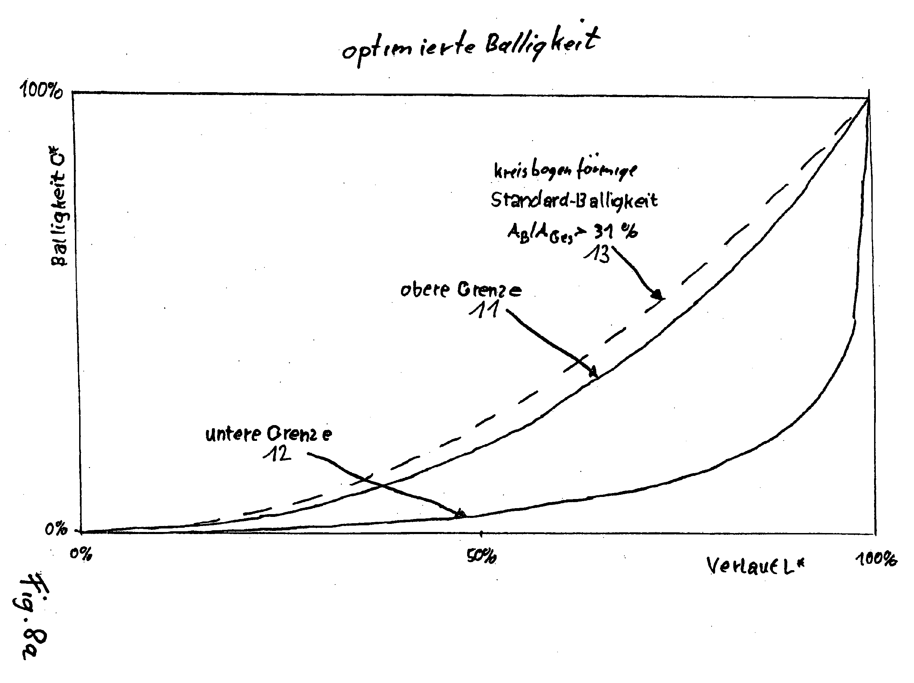

1. Betrag der Fläche unterhalb der Kurve (Fig. 8a)

Durch den flacheren Verlauf der Kurve in der Flankenmitte wird bei der optimierten Balligkeit ein Verhältnis $A_B/A_{Ges}$ = 10 bis 30% erreicht.

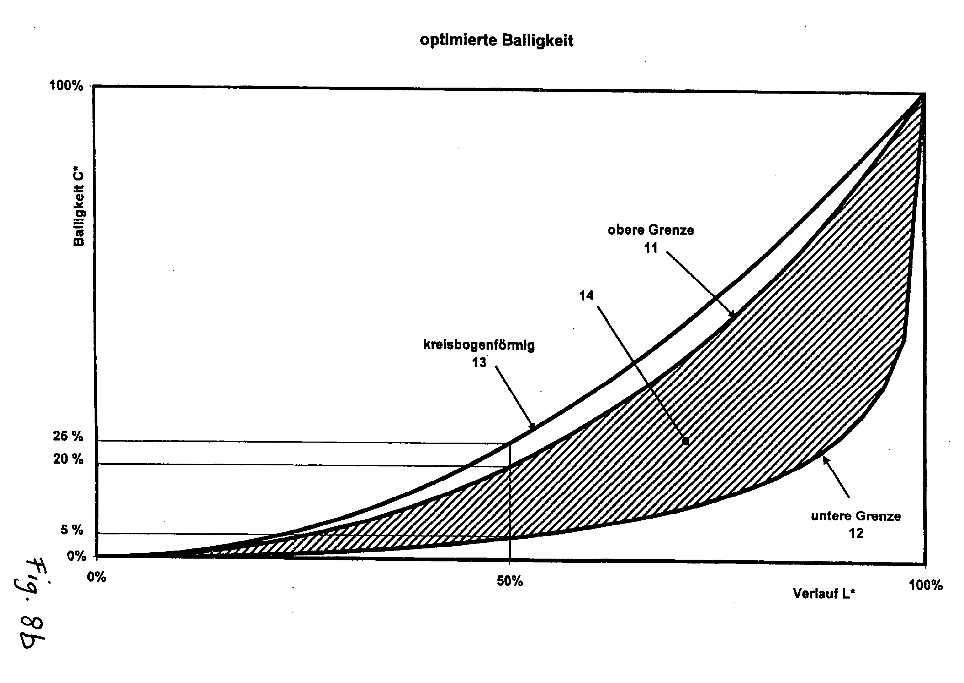

2. Betrag der Kurve in der Mitte der Längen L* (Fig. 8b)

Für das zweite Merkmal der neuen Balligkeit, dem Funktionswert der Kurve in der Mitte, also bei 50%, des Verlaufs L*, Referenzangaben für C* für die obere und untere Grenze. Für die obere Grenze wird der Referenzwerte von 20% des Flächeninhaltes des von L* und C* aufgespannten Gesamtrechteckes definiert. Für die untere Grenze wird der Referenzwert für C* von 5% definiert.

Die beiden Grenzlinien werden wie folgt definiert:

$$f(x) = C^* \cdot \frac{\log\left(1 - \left(\frac{x}{1{,}5 \cdot L^*}\right)^2\right)}{\log\left(1 - \left(\frac{1}{1{,}5}\right)^2\right)}$$

Formel der oberen Grenzkurve (Abb. 8a)

$$f(x) = C^* \cdot \frac{\log\left(1 - \left(\frac{x}{1{,}001 \cdot L^*}\right)^2\right)}{\log\left(1 - \left(\frac{1}{1{,}001}\right)^2\right)}$$

Formel der unteren Grenzkurve (Abb. 8a)

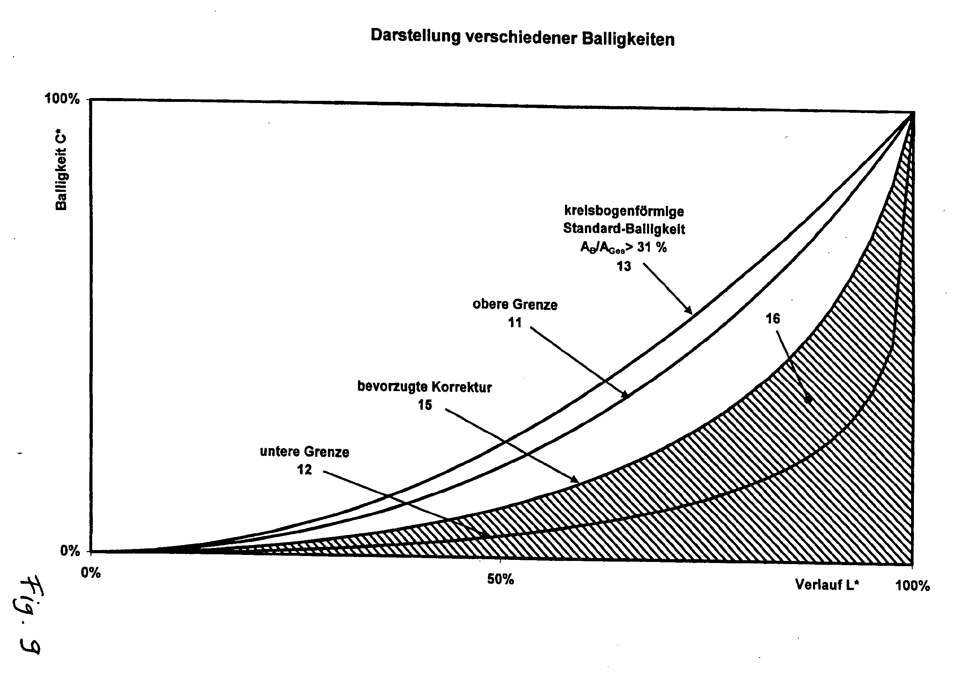

Durch die obere und untere Grenzlinie wird ein Bereich für die optimierte Zahnflankenkontur eingeschlossen (Fig. 8a, 8b und 9). In diesem Bereich verlaufen die bevorzugten optimierten Zahnflankenkonturverläufe der Zähne in Abhängigkeit der Kriterien, die die Spannungsverläufe im Zahn und auf der Zahnoberfläche bei Belastung beeinflussen. Die Kriterien richten sich nach vor Allem nach konstruktiven Vorgaben und sind, da die Berücksichtigung bzw. Auswahl Anwendungsfall spezifisch sind, nicht relevant.

Der Vorteil solcher Zahnflanken von Kegelzahnrädern ist ein maximiertes Potential zur Drehmomentübertragung.

Besonders günstig ist hierbei die verringerte Menge an Material (Materialabtragung), die an den einzelnen Zähnen nach der Rohbearbeitung abgetragen werden muss.

Von Vorteil ist, dass hierbei gleichmäßigere Belastungen der Zähne entlang der Zahnflanken auftreten. Dies führt zu einer verringerten punktuellen Spitzenbelastung an kritischen Stellen des Zahnes und vergrößert somit die Lebensdauer.

Von Vorteil ist auch, dass ein vergrößertes Tragbild eine größere Abwälzfläche aufweist. Bei Belastungen wird somit eine geringere Flächenpressung bei gleichbleibender Belastung erreicht, was die Abnutzung der Kontaktfläche verringert. Dies reduziert den Verschleiß und erhöht somit die Standzeit eines Getriebes. Zeitgleich können somit größere Wartungsintervalle eingeplant werden, was nicht nur beim Einsatzbereich von Ruderpropellerantrieben wichtig ist.

Besonders vorteilhaft ist dabei auch, dass die bisher bekannten Verfahren zur Maximierung der Drehmomentübertragungskapazität eines Zahnes in der Produktion sowie die vorzugsweise genutzte Materialpaarungen mit der hier dargestellten neuen Idee kombinierbar sind.

Im Folgenden wird ein Ausführungsbeispiel der Erfindung Anhand der Zeichnungen erläutert:

| | |
|---|---|
| Figur 1 | zeigt die "Ease-Off"-Darstellung zweier in Eingriff kommender Zahnräder. |
| Figur 2 | zeigt ein normales Tragbild im Bezug zur Zahnradflanke. |
| Figur 3 | stellt ein entlang der Zahnbreite b verlagertes Tragbild dar. |
| Figur 4 | zeigt die Breitenballigkeit entlang einer Zahnbreite. |
| Figur 5 | stellt die Höhenballigkeit entlang der Zahnhöhe dar. |
| Figur 6a | stellt die kreisbogenförmige normale Balligkeit also den Verlauf gegenüber der Balligkeit C* dar. |
| Figur 6b | stellt bei einer "normalen" kreisbogenförmigen Balligkeit einen entsprechenden Referenzpunkt dar. |
| Figur 7a und 7b | stellen in einer Ease-off-Darstellung den "normalen" kreisbogenförmigen Verlauf der Balligkeit den Verlauf der Balligkeit der optimierten Zahnflanke gegenüber. |
| Figur 8a | stellt für die optimierte Balligkeiten die Grenzen und den Bereich für den bevorzugten Verlauf dar. |
| Figur 8b | stellt für die optimierte Balligkeit die Referenzpunkte für die obere und untere Grenzkurve dar. |
| Figur 9 | stellt die verschiedenen Balligkeitsverläufe gegenüber. |
| Figur 10a | stellt ein Kegelzahnrad dar indem das Lasttragbild einer tragenden, mit "normaler" kreisbogenförmiger Balligkeit verlaufenden Fläche mit hohen Pressungen eingezeichnet ist. |

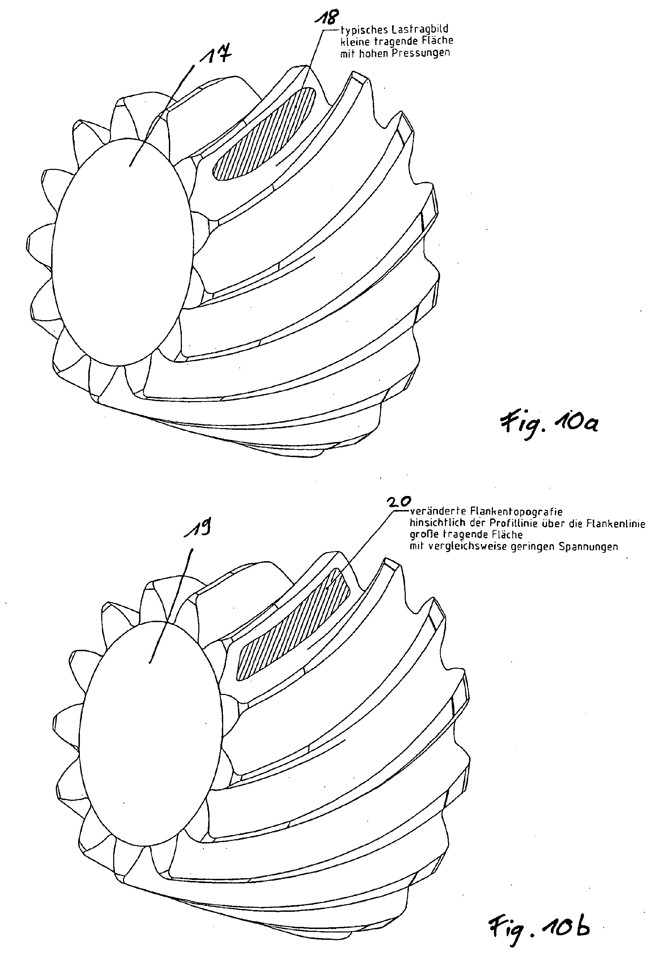

Figur 10b stellt ein Kegelzahnrad dar, indem die Flankentopographie der Zahnradflanke optimiert wurde, die somit ein größeres Tragbild aufweist.

Da die nachfolgenden Betrachtungen der Balligkeit, aus erfinderischer Sicht, für Höhen- und Breitenballigkeit gleich sind, wird im Allgemeinen der Begriff Balligkeit verwendet. Wenn erforderlich wird an entsprechender Stelle im Besonderen dann zwischen Breiten- und Höhenballigkeit unterschieden.

Figur 1 zeigt hierbei die "Ease-Off" Darstellung, in der zwei ineinander eingreifende Zahnflanken ohne Last dargestellt werden. Die erste Zahnflanke 1 ist dabei zu einer Ebene verformt. Die zweite Zahnflanke 2 stellt eine somit überhöht gekrümmte Zahnflanke dar. Der Wert für Klaffmaß bzw. Lüftung zwischen zwei auf den beiden gegenüberliegenden Punkten zweier Zahnflanken ist hierdurch erkennbar. Mit Hilfe dieser 3D-Darstellung können die Abstände zwischen den beiden Zahnflanken nachgemessen werden. Die Figur 1 zeigt hierbei entsprechende Verläufe der Breitenballigkeiten und Höhenballigkeiten entlang eines 3D Rasters. Die Figur 1 zeigt dabei bereits ein verlagertes Tragbild, d.h. der Kontaktpunkt zwischen den beiden Zahnflanken liegt nicht mittig zentriert entlang der Zahnbreite und Zahnhöhe sondern ist hier entlang der Zahnbreite verschoben. Dies ist an den unterschiedlichen Längen b1 und b2 entlang der Zahnbreite erkennbar.

Figur 2 zeigt allgemein einen Verlauf einer Balligkeit 3 entlang der Zahnbreite b sowie den Berührpunkt 4 eines beispielhaften Tragbildes mit einer exemplarischen Referenzfläche. Dieser Verlauf ist ein beispielhafte Ausschnitt aus einer 3D "Ease-Off"-Darstellung. Der Berührpunkt liegt in L*, welches die Mitte der Zahnflankenbreite b/2 ist. C stellt dabei das Klaffmaß oder auch die Lüftung dar.

Die Figur 3 zeigt analog zu Figur 2 Verlauf der Balligkeit 5, hier jedoch mit einem verlagerten Tragbild, das entlang der Zahnbreite b versetzt ist. Die Lage des Kontaktpunktes oder auch Berührpunktes 6 der ebenen Zahnflanke und der gegenüberliegenden Zahnflanke wird durch die Größen $L^*_1$ und $L^*_2$ angegeben. An der linken Stirnseite des Zahnrades besteht aufgrund des verlagerten Tragbildes eine größere Lüftung $C^*_1$, wobei an der rechten Seite des Zahnrades eine kleinere Lüftung $C^*_2$ zu finden ist.

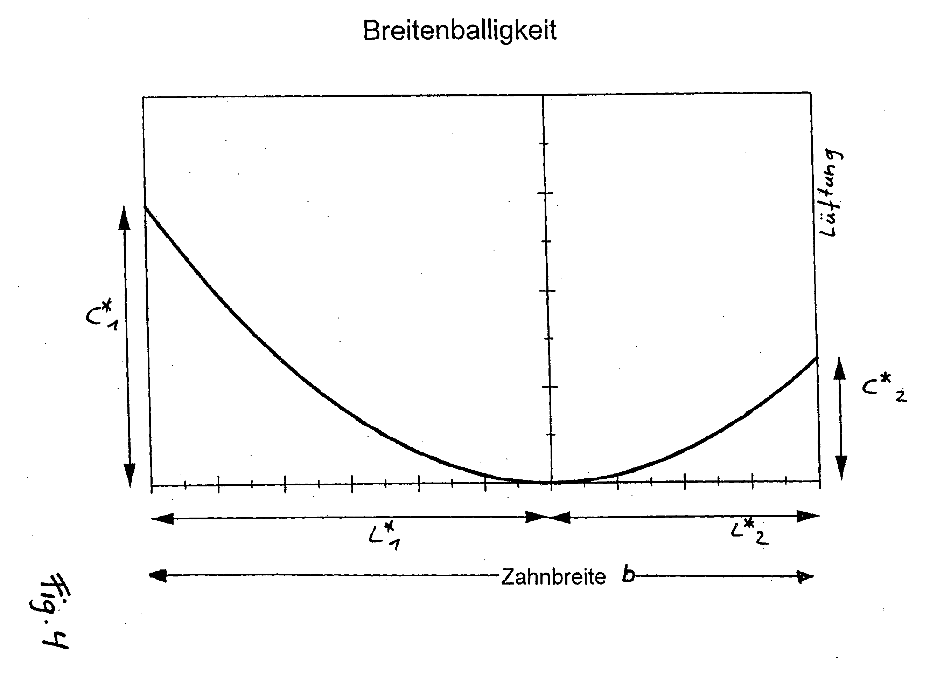

Figur 4 veranschaulicht im Speziellen anhand eines 2D-Auschnitts aus der 3D-"Ease-Off"-Darstellung von Figur 1 die Breitenballigkeit entlang der Zahnbreite b mit einem verlagerten Tragbild einer Zahnflanke. Die Lüftung $C^*_1$ ist im Vergleich zur Lüftung $C^*_2$ doppelt so groß.

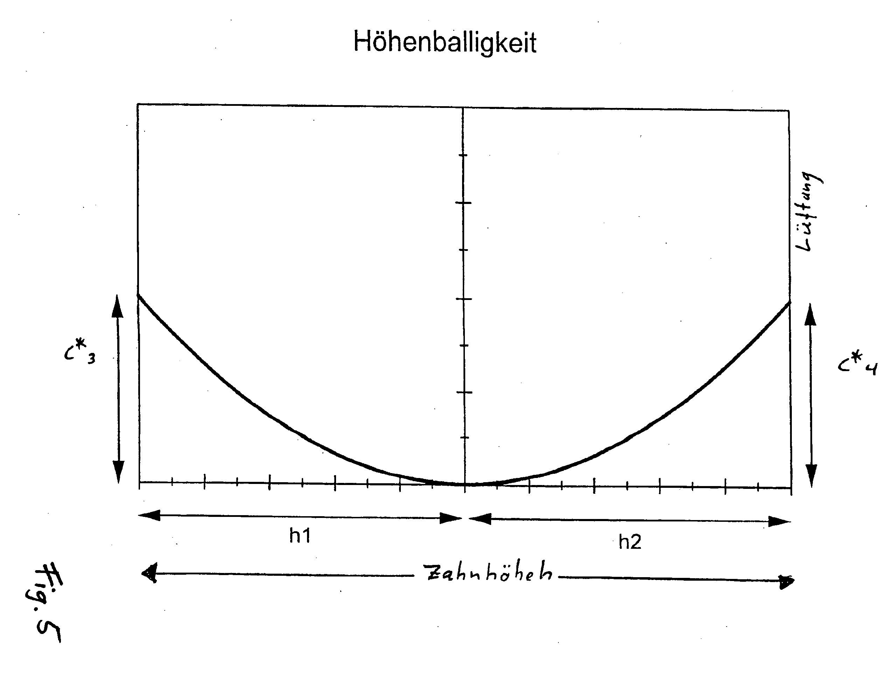

Figur 5 zeigt die Höhenballigkeit einer Zahnflanke mit den jeweiligen Lüftungen $C^*_3$ und $C^*_4$. Die Höhenballigkeit ist hierbei symmetrisch (erkennbar an identisch großen Längen von h1 und h2). Es können jedoch auch unsymmetrische Höhenballigkeiten konstruiert werden.

Die Figur 6a beschreibt den Verlauf der Zahnflankenballigkeit für "normale" kreisbogenförmige Balligkeiten, die auch als Standard-Balligkeiten bezeichnet werden. Hierbei spannen Abszisse und Ordinate ein Rechteck mit der Fläche $A_{Ges}$ 7 auf. Bei Standard-Balligkeiten gilt im Allgemeinen, dass die Fläche $A_B$ 8a bezogen auf $A_{Ges}$ 7 größer 31 % ist. Die Restfläche 8b, oberhalb der Kurve der kreisbogenförmigen Standard-Balligkeiten, stellt den überhöht dargestellten Zahn der EASE-Off-Darstellung dar. Die schraffierte Fläche 8a unterhalb der unteren Grenzkurve 9 für die kreisbogenförmige Standard-Balligkeit zeigt die Fläche, die bei der Zahnradfertigung z.B. spanend entfernt wird. Hierbei liegen für diese "normalen" kreisbogenförmigen Balligkeitsverläufen die Breitenballigkeiten im Wertebereich von b/500 bis b/1500 und die Höhenballigkeiten im Wertebereich von $0,003m_0$ bis $0,006m_0$. Die Kurve, die mit $A_B$ durch $A_{Ges}$ gleich 33,4%-Flächeninhalt angegeben ist, zeigt eine der möglichen kreisförmigen Standardkurven, die bisher häufig zum Einsatz kommen.

Figur 6b zeigt bei einem "normalen" kreisbogenförmigen Balligkeitsverlauf den entsprechenden prozentualen Referenzpunkt für C* = 25% beim Längenverlauf L* = 50%.

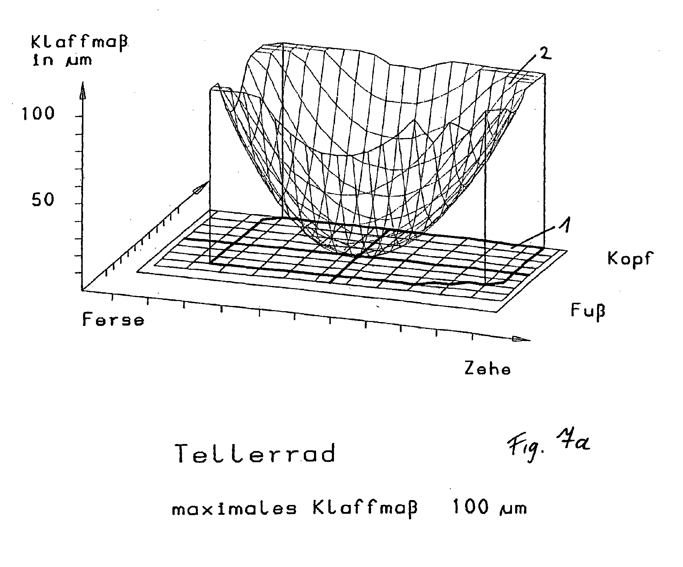

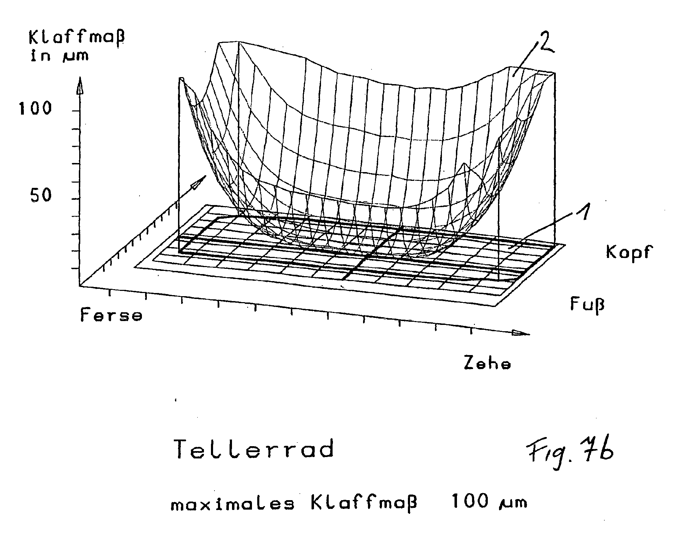

Die Figur 7a stellt die 3D "Ease-Off"-Betrachtung für eine kreisbogenförmige Balligkeit dar. Figur 7b wird Figur 7a gegenübergestellt und stellt die 3D "Ease-Off"-Betrachtung des neuen optimierten Tragbildes dar. Die unterschiedlich großen Lüftungen zwischen der zu einer Ebene verformten Zahnflanke 1 und der überhöht gekrümmten Zahnflanke 2 sind hierbei erkennbar. Aus der Gegenüberstellung ist ebenfalls ersichtlich, dass bei der optimierten Zahnflankenform weniger Material abgetragen werden muss. Im Vergleich von Abbildung 7a und 7b ist gleichzeitig auch ersichtlich, dass ein vergrößertes Tragbild vorliegt.

Die Figur 8a beschreibt die Verläufe von oberer Grenze 11 und unterer Grenze 12 für die Verläufe eines optimierten vergrößerten Tragbildes. Diese Grenzen schließen den Bereich ein, in dem die bevorzugten Verläufe eines optimierten Tragbildes definiert werden. Deutlich zu sehen ist, dass die obere Grenze der optimierten Tragbilder deutlich unter der Grenzkurve 13 verläuft, die die untere Grenze der "normalen" kreisbogenförmigen Standard-Balligkeit begrenzt.

Figur 8b beschreibt mit Hilfe der Prozentangaben Referenzpunkte der Balligkeitsverläufe entlang der Zahnflankenbreite und stellt hierbei die untere Grenzkurve 13 für "normale" kreisbogenförmige Balligkeiten dem Bereich 14 für optimierte Balligkeiten gegenüber. Die Referenzpunkte liegen bei 50% der Verlaufes entlang der Zahnbreite L* für die obere Grenzkurve bei 20% und für die untere Grenzkurve bei 5%.

Figur 9 stellt die verschiedenen bisher betrachteten Kurven gegenüber. Diese sind:

• die "normale" kreisbogenförmige Standard-Balligkeit 13 welche im Allgemeinen $A_B/A_{ges} > 31\%$ ist
- die obere Grenze 12 der optimierten Balligkeit
- die untere Grenze 11 der optimierten Balligkeit
- eine zwischen oberer und unterer Grenze für optimierte Balligkeiten liegende bevorzugte Korrekturkurve 15 für den Zahnflankenverlauf eines speziellen Zahnrades.

Unterhalb der bevorzugten Korrekturkurve wird durch Schraffur eine Fläche 16 hervorgehoben. Diese Fläche stell den Bereich dar, der mit Hilfe der zur Anwendung kommenden Fertigungsverfahren abgetragen, z.B. abgefräst werden muss. Deutlich erkennbar im Vergleich mit der Standardballigkeit ist, dass bei der optimierten Zahnflankenform ausgehend vom Rohling des Kegelzahnrades deutlich weniger Material entfernt werden muss, als bei der kreisförmigen Standardballigkeit.

Figur 10a stellt ein Kegelzahnrad 17 als Ganzes dar, welches Zahnflanken mit typisch kreisbogenförmiger Balligkeiten aufweist. Hier ersichtlich ist die tragende Fläche 18, in der Graphik weiter ausgeführt mit einer kleinen tragenden Fläche mit hoher Pressung, wie sie bei dem Einsatz von hoch vergüteten Zahnrädern zu finden sind. Die elliptische Ausprägung dieser Fläche ist deutlich.

Figur 10b stellt ein Zahnrad 19 mit veränderter Flankentopographie dar. Dieses hat aufgrund des optimierten vergrößerten Tragbildes eine veränderte Kontaktfläche 20. Diese Kontaktfläche lässt sich mit einem Rechteck beschreiben, welches abgerundete Ecken hat.

**Patentansprüche**

1. Verfahren zum Herstellen eines Kegelzahnrades insbesondere für Ruderpropeller, dessen Zähne eine zahnradspezifische Makrogeometrie aufweisen, dessen Zähne durch Flanken- und Profillinien beschreibbar sind, dessen Flanken eine Zahnflankenmikrotopogaphie aufweisen und dessen Tragbild den Kontaktbereich der in den Eingriff kommenden Zähne darstellt, wobei die Balligkeit einer Zahnflanke die Überhöhung der Zahnflankenmitte gegenüber dem Zahnflankenrand entspricht, **dadurch gekennzeichnet, dass** durch eine punktgenaue Materialabtragung die Mikrotopographie der Zahnflanke und somit das Tragbild optimiert wird,

   • indem die Materialabtragung derart ausgeführt wird, dass die Endrücknahme an der Zahnflankenfläche zur Zahnfersenseite und Zahnzehenseite verringert wird, eine Fläche mit größerer Länge und Breite auf der Zahnflanke zum Eingriff kommt, und

   • indem der Verlauf der Balligkeit einer Zahnflanke bei der lastfreien Betrachtung der Lüftung bei einem Längsschnitt in der Flankenschnittfläche und/oder bei einem Profilschnitt in der Profilschnittfläche einer annähernd logarithmischen, elliptischen und/oder exponentiellen Kurvenform folgt, die durch den Berührpunkt verläuft, und

   • indem ein Fräser eine Bearbeitungskurve abfährt, die mit einer Korrekturkurve zum Erzeugen des optimierten Lasttragbildes überlagert ist und die die Profillinien und/oder Flankenlinien entlang der gesamten Zahnbreite und Zahnhöhe der entsprechenden mathematischen Korrekturkurve (logarithmischer, elliptischer oder exponentieller Art) bildet, wobei diese zwischen einer oberen und einer unteren Grenzkurve liegt, und

   • dass die Verzahnung als Spiralverzahnung oder Bogenverzahnung ausgeführt wird.

2. Verfahren nach dem vorhergehenden Anspruch, **dadurch gekennzeichnet, dass** die in der Flankenschnittfläche befindliche Flankenkontur die Flankenschnittfläche in eine den Zahn schneidende und eine Restfläche aufteilt und die Größe dieser Restfläche 10 % bis 30%, vorzugsweise 20% bis 28%, der Gesamtfläche beträgt, wobei unter einer "Flankenschnittfläche" eine Fläche verstanden wird, die in einer lastfreien Lüftungsbetrachtung in Zahnlängsrichtung durch den Berührpunkt zwischen Zahn und Gegenzahn verläuft und hierbei rechtwinkelig zu der Referenzfläche steht, die von der zu einer ebenen Fläche gerade gebogenen Flanke des Gegenzahnes gebildet wird.

3. Verfahren nach einem der vorhergehenden Ansprüche, **dadurch gekennzeichnet, dass** die in der Flankenschnittfläche befindliche Flankenkontur die Flankenschnittfläche in eine den Zahn schneidende und eine Restfläche aufteilt, wobei die Größe dieser Restfläche definiert wird als Integral zwischen dem Berührpunkt und dem Zahnflankenende.

4. Verfahren nach Anspruch 2 oder Anspruch 3, **dadurch gekennzeichnet, dass** die Gesamtfläche der Flankenschnittfläche, bei einem verlagerten Tragbild, durch den Betrag der Lüftung und der Strecke vom Berührpunkt bis zum Zahnflankenende aufgespannt wird.

5. Verfahren nach dem vorhergehenden Anspruch, **dadurch gekennzeichnet, dass** die Steuerung des punktgenau abtragenden Werkzeuges, insbesondere eines Fräskopfes der Werkzeugmaschine, durch ein Programm erfolgt, das zu logarithmischen, elliptischen oder exponentiellen Flanken- und/oder Profillinienverläufen, wie die im Längsschnitt und/oder Profilschnitt im Berührpunkt, führt.

6. Verfahren nach einem der vorhergehenden Ansprüche, **dadurch gekennzeichnet, dass** die untere Grenzkurve, mit einer Restfläche von 10%, für die Korrektur zum Erzeugen des optimierten Lasttragbildes wie folgt definiert wird:

$$f(x) = C * \frac{\log\left(1 - \left(\frac{x}{1{,}001 \cdot L*}\right)^2\right)}{\log\left(1 - \left(\frac{1}{1{,}001}\right)^2\right)}.$$

L*: Zahnflankenkantenlänge
C*: normierte Balligkeit

7. Verfahren nach einem der vorhergehenden Ansprüche, **dadurch gekennzeichnet, dass** die obere Grenzkurve, mit einer Restfläche von 30%, für die Korrektur zum Erzeugen des optimierten Lasttragbildes wie folgt definiert wird:

$$f(x) = C * \frac{\log\left(1 - \left(\frac{x}{1{,}5 \cdot L*}\right)^2\right)}{\log\left(1 - \left(\frac{1}{1{,}5}\right)^2\right)}$$

L*: Zahnflankenkantenlänge
C*: normierte Balligkeit

8. Verfahren nach einem der vorhergehenden Ansprüche, **dadurch gekennzeichnet, dass** der Fräser, der die beiden sich berührenden Flanken bearbeitet, eine Makrogeometriekurve abfährt, die der unoptimierten Zahnform entspricht, der eine Korrekturkurve überlagert ist, die die Mikrogeometrie, mit einer optimierte Lüftung der in Eingriff kommenden Zahnflanken herstellt.

9. Verfahren nach einem der vorhergehenden Ansprüche, **dadurch gekennzeichnet, dass** im Fertigungsprozess zunächst durch Bearbeitungsmaschinen die konjugierte Verzahnung des Zahnrades hergestellt wird und im nachfolgenden Schritt zeitgleich im Bereich der Makrogeometrie, die grundlegende Form der Zahnflanke des Zahnrades und im Bereich der Mikrogeometrie, die spezielle Form der Balligkeit für die optimierte Lüftung hergestellt wird.

10. Verfahren nach dem vorhergehenden Anspruch, **dadurch gekennzeichnet, dass** das Tragbild in der Weise verlagert wird, dass der Mittelpunkt der Abwälzfläche außerhalb des Mittelpunktes der Zahnflanke liegt.

11. Verfahren nach einem der vorhergehenden Ansprüche, **dadurch gekennzeichnet, dass** das Lasttragbild eine weitestgehend viereckige insbesondere rechteckige Form mit abgerundeten Ecken ausweist.

12. Verfahren nach Anspruch 11, **dadurch gekennzeichnet, dass** das viereckige oder rechteckige Lasttragbild mit abgerundeten Ecken der Eingriffsgröße nach mindestens der Größe des im wesentlichen elliptischen Lasttragbildes entspricht.

13. Verfahren nach einem der vorhergehenden Ansprüche, **dadurch gekennzeichnet, dass** zum Hartfeinbearbeiten, insbesondere nach dem Härten, der Zähne des Kegelzahnrades anstelle eines Läppens der Kontaktflächen durch eine punktgenaue Materialabtragung an den Zahnflanken die glatten Kontaktflächen des Lasttragbildes durch Fräsen oder Schleifen mit einem Vier- oder Mehrachsverfahren gefertigt werden.

14. Verfahren nach einem der vorhergehenden Ansprüche, **dadurch gekennzeichnet, dass** es zur Herstellung von Schiffsantriebsgetrieben, insbesondere Ruderpropellergetriebe, vorzugsweise als Unterwassergetriebe des Gondelantriebes, verwendet wird.

15. Verfahren nach einem der vorhergehenden Ansprüche, **dadurch gekennzeichnet, dass** es zur Herstellung von Schiffsantriebsgetrieben im Leistungsspektrum von 100 kW bis 10000 kW verwendet wird.

16. Verfahren nach einem der vorhergehenden Ansprüche, zur Herstellung von Kegelzahnrädern eines Kegelradgetriebes, deren Verlauf entlang der Zahnflanke annähernd einer kreisbogenförmigen, epizykloidischen oder evolventischen Kurve entspricht.

17. Verfahren nach einem der vorhergehenden Ansprüche, **dadurch gekennzeichnet, dass** der Verlauf der Höhen- und Breitenballigkeit der Flankenfläche im wesentlichen kreisbogenförmig ist.

**Claims**

1. Method for the production of a bevel gearwheel particularly for rudder propellers, the teeth of which have a gearwheel-specific macrogeometry, the teeth of which can be described by flank and profile lines, the flanks of which have a tooth flank microtopography and the contact pattern of which illustrates the contact region of the intermeshing teeth, the crowning of a tooth flank corresponding to the elevation of the tooth-flank centre with respect to the tooth-flank margin, **characterized in that**, by point-accurate material removal, the microtopography of the tooth flank and therefore the contact pattern are optimized,

• **in that** material removal is carried out in such a way that the final relief on the tooth-flank face with respect to the tooth-heel side and the tooth-toe side is reduced, a face with greater length and width on the tooth flank comes into engagement, and
• **in that** the profile of the crowning of a tooth flank in load-free consideration of the ease-off in the case of a longitudinal section in the flank section face and/or in the case of a profile section in the profile section face follows an approximately logarithmic, elliptical and/or exponential curve form which runs through the contact point, and
• **in that** a milling cutter moves along a machining curve which is superposed with a correcting curve for generating the optimized load contact pattern and which forms the profile lines and/or flank lines along the entire tooth width and tooth height of the corresponding mathematical correcting curve (of logarithmic, elliptical or exponential type), the latter lying between an upper and a lower limit curve, and
• **in that** the toothing is designed as helical toothing or spiral toothing.

2. Method according to the preceding claim, **characterized in that** the flank contour located in the flank section face divides the flank section face into a tooth-intersecting face and a residual face and the size of this residual face amounts to 10% to 30%, preferably 20% to 28%, of the overall area, a "flank section face" being understood to mean a face which, in load-free consideration of ease-off, runs in the tooth longitudinal direction through the contact point between tooth and countertooth and at the same time stands at right angles to the reference face which is formed by the countertooth flank just bent into a planar face.

3. Method according to one of the preceding claims, **characterized in that** the flank contour located in the flank section face divides the flank section face into a tooth-intersecting face and a residual face, the size of this residual face being defined as an integral between the contact point and the tooth-flank end.

4. Method according to Claim 2 or Claim 3, **characterized in that** the overall area of the flank section face, in the case of a displaced contact pattern, is spanned by the amount of ease-off and the distance from the contact point as far as the tooth-flank end.

5. Method according to the preceding claim, **characterized in that** the control of the point-accurate removing tool, in particular a milling head of the machine tool, takes place by means of a program which leads to logarithmic, elliptical or exponential flank and/or profile line profiles, such as those in longitudinal section and/or profile section at the contact point.

6. Method according to one of the preceding claims, **characterized in that** the lower limit curve, with a residual face of 10%, for correction for the purpose of generating the optimized load contact pattern is defined as follows:

$$f(x) = C^* \frac{\log\left(1 - \left(\frac{x}{1.001 \cdot L^*}\right)^2\right)}{\log\left(1 - \left(\frac{1}{1.001}\right)^2\right)}$$

$L^*$ : tooth-flank edge length
$C^*$ : standardized crowning.

7. Method according to one of the preceding claims, **characterized in that** the upper limit curve, with a residual face of 30%, for correction for the purpose of generating the optimized load contact pattern is defined as follows:

$$f(x) = C^* \frac{\log\left(1 - \left(\frac{x}{1.5 \cdot L^*}\right)^2\right)}{\log\left(1 - \left(\frac{1}{1.5}\right)^2\right)}$$

$L^*$ : tooth-flank edge length
$C^*$ : standardized crowning.

8. Method according to one of the preceding claims, **characterized in that** the milling cutter which machines the two mutually contacting flanks moves along a macrogeometry curve which corresponds to the non-optimized tooth form and on which is superposed a correcting curve which produces the microgeometry with optimized ease-off of the intermeshing tooth flanks.

9. Method according to one of the preceding claims, **characterized in that**, in the manufacturing process, the conjugated toothing of the gearwheel is first produced by machine tools, and in the following step, simultaneously, the basic form of the tooth flank of the gearwheel is produced in the region of the macrogeometry and the special form of the crowning for optimized ease-off is produced in the region of the microgeometry.

10. Method according to the preceding claim, **characterized in that** the contact pattern is displaced in such a way that the centre point of the rolling face lies outside the centre point of the tooth flank.

11. Method according to one of the preceding claims, **characterized in that** the load contact pattern has an as far as possible square, in particular rectangular, form with rounded corners.

12. Method according to Claim 11, **characterized in that** the square or rectangular load contact pattern with rounded corners corresponds to the engagement size according to at least the size of the essentially elliptical load contact pattern.

13. Method according to one of the preceding claims, **characterized in that**, for hard fine machining, in particular after hardening, of the teeth of the bevel gearwheel, instead of lapping of the contact faces by point-accurate material removal on the tooth flanks, the smooth contact faces of the load contact pattern are manufactured by milling or grinding by means of a four-axis or multi-axis method.

14. Method according to one of the preceding claims, **characterized in that** it is used for the production of ship's drive transmissions, in particular rudder propeller transmissions, preferably as underwater transmissions of the engine pod drive.

15. Method according to one of the preceding claims, **characterized in that** it is used for the production of ship's drive transmissions in the power range from 100 kW to 10,000 kW.

16. Method according to one of the preceding claims, for the production of bevel gearwheels of a bevel gear transmission, of which the profile along the tooth flank corresponds approximately to a circular-arcuate, epicycloidal or involute curve.

17. Method according to one of the preceding claims, **characterized in that** the profile of the height and width crowning of the flank face is essentially circular-arcuate.

## Revendications

1. Procédé de fabrication d'une roue dentée conique, en particulier pour hélice de gouvernail, dont les dents présentent une macrogéométrie spécifique à la roue dentée, dont les dents peuvent être décrites par des lignes de flanc et des lignes de profil, dont les flancs présentent une microtopographie de flanc de dent et dont le motif de support représente la zone de contact de l'engagement mutuel des dents, le bombement d'un flanc de dent représentant la surélévation du milieu du flanc de la dent par rapport au bord du flanc de la dent, **caractérisé en ce que** la microtopographie des flancs de dent et donc le motif porteur sont optimisés par un enlèvement de matière point par point, en réalisant l'enlèvement de matière de telle sorte que le retrait final de la surface du flanc de la dent par rapport au côté du talon de la dent et au côté du sommet de la dent soit diminué, une surface de plus grande longueur et de plus grande largeur venant s'engager sur le flanc de la dent, par le fait que l'évolution du bombement d'un flanc de dent lors d'un examen sans charge de l'aération sur une coupe longitudinale dans la surface de coupe du flanc et/ou dans une coupe profilée dans la surface du profil suit une courbe de forme sensiblement logarithmique, elliptique ou exponentielle qui passe par le point de contact, **en ce qu'**une fraise parcourt une courbe de traitement qui est superposée à une courbe de correction servant à former le motif optimisé de support de charge et qui forme sur toute la largeur et la hauteur de la dent les lignes de profil et/ou les lignes de flanc de la courbe mathématique de correction correspondante (de nature logarithmique, elliptique ou exponentielle), cette dernière étant située entre une courbe limite supérieure et une courbe limite inférieure et en réalisant la denture comme denture en spirale ou comme denture en arc.

2. Procédé selon la revendication précédente, **caractérisé en ce que** le contour de flanc situé dans la surface de coupe du flanc divise la surface de coupe du flanc en une surface qui coupe la dent et une surface résiduelle, **en ce que** la taille de cette surface résiduelle représente de 10 % à 30 % et de préférence de 20 % à 28 % de la surface totale, l'expression "surface de coupe du flanc" représentant une surface qui, en observant la ventilation en l'absence de charge, s'étend dans le sens de la longueur de la dent en passant par le point de contact entre la dent et la dent complémentaire et est ainsi perpendiculaire à la surface de référence formée par le flanc de la dent complémentaire cintrée par rapport à une surface plane.

3. Procédé selon l'une des revendications précédentes, **caractérisé en ce que** le contour du flanc situé dans la surface de coupe du flanc divise la surface de coupe du flanc en une surface coupant la dent et une surface résiduelle, la taille de cette surface résiduelle étant définie comme étant l'intégrale entre le point de contact et l'extrémité du flanc de la dent.

4. Procédé selon la revendication 2 ou la revendication 3, **caractérisé en ce que** dans un motif porteur déplacé, la surface totale de la surface de coupe du flanc est sous-tendue par les niveaux de la ventilation et le parcours qui s'étend entre le point de contact et l'extrémité du flanc de la dent.

5. Procédé selon la revendication précédente, **caractérisé en ce que** la commande de l'outil d'enlèvement point par point, en particulier de la tête de fraisage de la machine-outil, s'effectue à l'aide d'un programme qui conduit à une évolution logarithmique, elliptique ou exponentielle de la ligne de flanc et/ou de la ligne profilée, de même que celle qui passe par le point de contact dans la coupe longitudinale et/ou la coupe de profil.

6. Procédé selon l'une des revendications précédentes, **caractérisé en ce que** la courbe limite inférieure qui présente une surface résiduelle de 10 % pour la correction en vue de former le motif optimisé de support de charge est définie comme suit :

$$f(x) = C^* \frac{\log\left(1 - \left(\frac{x}{1,001 \cdot L^*}\right)^2\right)}{\log\left(1 - \left(\frac{1}{1,001}\right)^2\right)}$$

dans laquelle

L* : longueur du bord du flanc de la dent
C* : bombement normé.

7. Procédé selon l'une des revendications précédentes, **caractérisé en ce que** la courbe limite supérieure, avec une surface résiduelle de 30 %, pour la correction en vue de former le motif optimisé de support de charge est définie comme suit :

$$f(x) = C^* \frac{\log\left(1 - \left(\frac{x}{1,5 \cdot L^*}\right)^2\right)}{\log\left(1 - \left(\frac{1}{1,5}\right)^2\right)}$$

dans laquelle

L* : longueur du bord du flanc de la dent
C* : bombement normé.

8. Procédé selon l'une des revendications précédentes, **caractérisé en ce que** la fraise qui travaille les deux flancs en contact mutuel décrit une courbe macrogéométrique qui correspond à la forme non optimisée de la dent et à laquelle est superposée une courbe de correction qui établit la microgéométrie avec une ventilation optimisée des flancs de dents s'engageant l'un sur l'autre.

9. Procédé selon l'une des revendications précédentes, **caractérisé en ce que** dans l'opération de fabrication, on forme d'abord par des machines de traitement la denture conjuguée de la roue dentée et dans l'étape suivante, on forme simultanément au niveau de la macrogéométrie la forme de base du flanc de la dent de la roue dentée et au niveau de la microgéométrie la forme spéciale du bombement qui permet la ventilation optimisée.

10. Procédé selon la revendication précédente, **caractérisé en ce que** le motif de support est déplacé de telle sorte que le centre de la surface de déroulement soit situé hors du centre du flanc de la dent.

11. Procédé selon l'une des revendications précédentes, **caractérisé en ce que** le motif de support de charge présente très approximativement la forme d'un quadrilatère et en particulier d'un rectangle à sommets arrondis.

12. Procédé selon la revendication 11, **caractérisé en ce que** le motif de support de charge en quadrilatère ou en rectangle à sommets arrondis correspond à la taille d'engagement selon au moins la taille du motif de support de charge essentiellement elliptique.

13. Procédé selon l'une des revendications précédentes, **caractérisé en ce que** pour l'usinage fin à l'état dur des dents de la roue dentée conique, en particulier après le durcissement, les surfaces lisses de contact du motif de support de charge sont réalisées par fraisage ou meulage à l'aide d'un procédé à quatre ou plusieurs axes au lieu d'un rodage des surfaces de contact par un enlèvement de matière point par point des flancs de la dent.

14. Procédé selon l'une des revendications précédentes, **caractérisé en ce qu'**il est utilisé pour fabriquer des transmissions d'entraînement de navire, en particulier des transmissions d'hélice de gouvernail, de préférence comme transmissions immergées de l'entraînement de fuseau.

**15.** Procédé selon l'une des revendications précédentes, **caractérisé en ce qu'**il est utilisé pour fabriquer des transmissions d'entraînement de navires dans une plage de puissance de 100 kW à 10 000 kW.

**16.** Procédé selon l'une des revendications précédentes, pour la fabrication de roues dentées coniques d'une transmission à roue conique, dont l'évolution le long d'un flanc de dent correspond sensiblement à une courbe en arc de cercle, en épicycloïde ou en développante.

**17.** Procédé selon l'une des revendications précédentes, **caractérisé en ce que** l'évolution du bombement en hauteur et en largeur de la surface de la dent a essentiellement la forme d'un arc de cercle.

Fig. 1

# normales Tragbild

$$L^* = b/2$$

Fig. 2

# verlagertes Tragbild

Fig. 3

Fig. 4

Fig. 5

Fig. 6a

Fig. 6b

Tellerrad

Fig. 4a

maximales Klaffmaß 100 μm

Tellerrad    Fig. 7b

maximales Klaffmaß    100 μm

optimierte Balligkeit

kreisbogenförmige
Standard-Balligkeit
$A_B/A_{Ges} > 31\%$
13

obere Grenze
11

untere Grenze
12

Balligkeit C*

Verlauf L*

Fig. 8a

EP 2 545 299 B1

optimierte Balligkeit

Fig. 8b

EP 2 545 299 B1

**Darstellung verschiedener Balligkeiten**

krelsbogenförmlge
Standard-Balligkelt
$A_B/A_{Ges} > 31\%$
13

obere Grenze
11

bevorzugte Korrektur
15

untere Grenze
12

16

Balligkeit C*

0%    50%    100%

Verlauf L*

*Fig. 9*

EP 2 545 299 B1

18 typisches Lastragbild
kleine tragende Fläche
mit hohen Pressungen

17

Fig. 10a

20 veränderte Flankentopografie
hinsichtlich der Profillinie über die Flankenlinie
große tragende Fläche
mit vergleichsweise geringen Spannungen

19

Fig. 10b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1170742